# EUROPEAN PATENT APPLICATION

(11) **EP 2 913 249 A1**
(43) Date of publication of application: **02.09.2015**
(21) Application number: 12887153.0
(22) Date of filing: 25.10.2012
(51) Int. Cl.: B62D 6/00

(54) **VEHICLE TRAVEL SUPPORT DEVICE**

(71) Applicant: Nissan Motor Co., Ltd, Yokohama-shi, Kanagawa 221-0023 (JP)
(72) Inventor: YOSHIHATA Yuta, Atsugi-shi Kanagawa 243-0123 (JP); SHIMAKAGE Masayasu, Atsugi-shi Kanagawa 243-0123 (JP)
(74) Representative: Hoefer & Partner Patentanwälte mbB
(86) International application number: PCT/JP2012/077622
(87) International publication number: WO 2014/064805

(57) **Abstract**

A vehicle travel assistance device for setting a target travel position (P) set apart by a forward watch point distance (Ls) in front of a host vehicle on a travel path and assisting the travel of the host vehicle so that the host vehicle travels through the set target travel position (P), the vehicle travel assistance device being provided with: an attitude determining unit (14a) for determining the orientation of the host vehicle in relation to the travel path; and a front watch point distance setting unit (14) that, when the host vehicle is oriented outwards with respect to the travel path, sets a forward watch point distance (Ls) obtained by reducing a forward watch point distance base value (Ls_base) so as to be smaller than when the orientation of the host vehicle is parallel to the travel path.

## Description

### Technological Field

The present invention relates to a vehicle travel assistance device.

### Background Technology

Patent Citation 1 discloses a technique in which the forward watch point distance determining the target travel position for steering control is set so as to be greater when the amount by which a vehicle is offset from the travel path center position is larger.

Patent Citation 2 discloses a technique in which the forward watch point distance is set so as to be smaller when the curvature radius of the travel path is smaller.

### Prior Art Citations

### Patent Citations

Patent Citation 1: Japanese Laid-Open Patent Application No. 2010-76573
Patent Citation 2: Japanese Laid-Open Patent Application No. 10-167100

### Disclosure of the Invention

### Problems to Be Solved by the Invention

However, in the technique disclosed in Patent Citation 1, in a case in which the travel path curves at a small curvature radius and the offset amount is larger, the forward watch point distance is set so as to be greater irrespective of the curvature radius, increasing the likelihood of lane departure.

In the technique disclosed in Patent Citation 2, the forward watch point distance is set so as to be smaller when the travel path is curved at a small curvature radius even when the likelihood of lane departure is small, resulting in a significant change in vehicle behavior and thereby imparting the driver with a sense of unease.

An object of the present invention is to provide a vehicle travel assistance device capable of both inhibiting lane departure and reducing the sense of unease imparted to the driver.

### Means Used to Solve the Above-Mentioned Problems

In order to achieve the above object, in the present invention, the forward watch point distance is set so as to be smaller when the host vehicle is oriented outwards with respect to the travel path than when the host vehicle is parallel to the travel path.

### Effect of the Invention

The likelihood of lane departure is higher when the host vehicle is oriented outwards with respect to the travel path and the likelihood of lane departure is lower when the host vehicle is not oriented outwards with respect to the travel path. Accordingly, when the host vehicle is oriented outwards with respect to the travel path, reducing the forward watch point distance makes it possible to inhibit lane departure, and when the host vehicle is not oriented outwards with respect to the travel path, avoiding a reduction in the forward watch point distance makes it possible to reduce the sense of unease imparted to the driver.

As a result, it is possible to both inhibit lane departure and reduce the sense of unease imparted to the driver.

### Brief Description of the Drawings

FIG. 1 is a schematic diagram showing a vehicle steering system to which a vehicle travel assistance device according to a first embodiment is applied;
FIG. 2 is a control block diagram for a control unit 6 according to the first embodiment;
FIG. 3 is a flow chart showing the flow of a steering control process executed by the control unit 6 according to the first embodiment;
FIG. 4 is a schematic diagram showing the control method and parameters for the steering control according to the first embodiment;
FIG. 5 is a time chart showing the operation control action and a schematic diagram showing the vehicle state according to the first embodiment when the driver performs a steering intervention on a straight road;
FIG. 6 is a schematic diagram showing the action of setting a forward watch point distance Ls according to the attitude angle ϕ according to the first embodiment; and
FIG. 7 is a schematic diagram showing the action of setting the forward watch point distance Ls according to the distance Ld to the road boundary according to a second embodiment.

### Explanation of Reference Numerals

- 1L, 1R: Left and right front wheels
- 2: Steering gear
- 3: Steering wheel
- 4: Steering shaft
- 5: Steering actuator
- 6: Control unit 6
- 7: Wheel speed sensor
- 8: Camera
- 9: GPS receiver
- 10: Target travel line identification unit
- 11: Attitude angle/lateral displacement detector (lateral displacement detection means, boundary line distance detection means)
- 12: Vehicle speed detector
- 13: Target travel position setting unit
- 14: Forward watch point distance setting unit
- 14a: Attitude determining unit (attitude determining means)
- 15: Steering controller

### Preferred Embodiments of the Invention

A preferred embodiment of the drive force transmission device of the present invention will now be described with reference to embodiments illustrated in the accompanying drawings.

### [First embodiment]

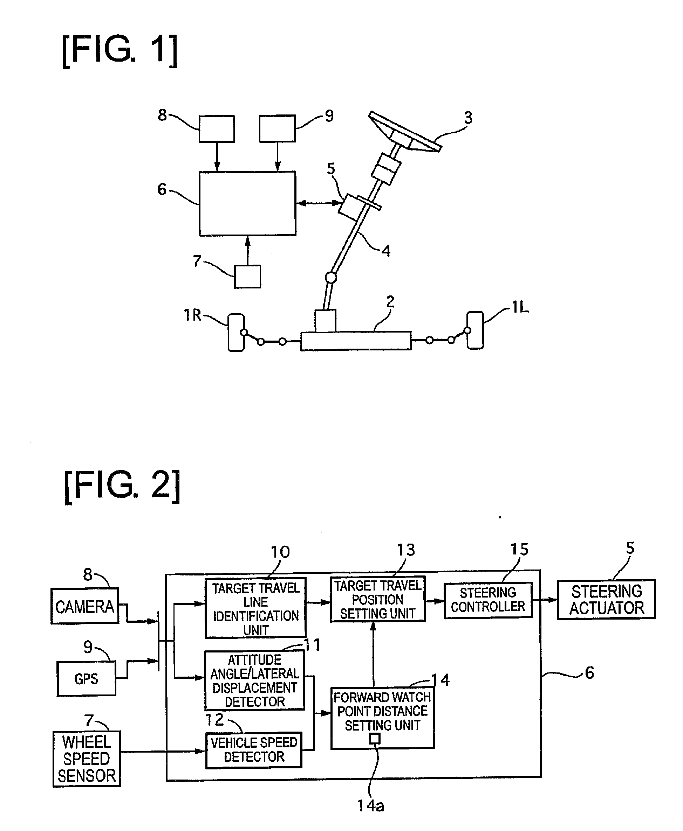

FIG. 1 is a schematic diagram showing a vehicle steering system to which a vehicle travel assistance device according to a first embodiment is applied. The vehicle steering system according to the first embodiment is provided with: left and right front wheels 1L, 1R, a steering gear 2, a steering wheel 3, a steering shaft 4, a steering actuator 5, a control unit 6, wheel speed sensors 7, a camera 8, and a GPS receiver 9.

The steering gear 2 converts a rotation motion, which is inputted into the steering shaft 4 by the driver performing a rotation operation on the steering wheel 3, into a parallel motion in the vehicle width direction, and steers the left and right front wheels 1L, 1R.

The steering actuator 5 is, e.g., an electric motor, and outputs a torque into the steering shaft 4 and steers the left and right front wheels 1L, 1R.

The wheel speed sensors 7 are provided to each wheel and detect the rotation speeds of the wheels.

The camera 8 images the front of the host vehicle.

The GPS receiver 9 receives a signal from a GPS satellite, references a map database, and detects the host vehicle position.

Information from the wheel speed sensors 7, the camera 8, and the GPS receiver 9 is inputted into the control unit 6, which drives the steering actuator 5 on the basis of a predetermined control logic, and performs travel assistance.

In order that the host vehicle travels along a target travel line at the lane-width center of a travel path, the control unit 6 performs a steering control, as travel assistance, when the travel line of the host vehicle deviates from the target travel line. The steering control sets a target travel position (forward watch point) on the travel path set apart by a forward watch point distance in front of the host vehicle, and drives the steering actuator 5 and steering the left and right front wheels 1L, 1R so that the vehicle travels to the target travel position.

FIG. 2 is a control block diagram for the control unit 6 according to the first embodiment. The control unit 6 is provided with a target travel line identification unit 10, an attitude angle/lateral displacement detector (lateral displacement detection means) 11, a vehicle speed detector 12, a target travel position setting unit 13, a forward watch point distance setting unit (watch point distance setting means) 14, and a steering controller 15. The control unit 6 executes the steering control described below.

The target travel line identification unit 10 identifies the target travel line on the basis of an imaged image obtained from the camera 8 and the host vehicle position information obtained from the GPS receiver 9.

The attitude angle/lateral displacement detector 11 calculates an attitude angle ϕ in relation to the travel path and the lateral displacement y of the host vehicle from the target travel line on the basis of the image captured from the camera 8 and the host vehicle position information obtained from the GPS receiver 9. The attitude angle ϕ is an angle formed by a vehicle axial line (straight line extending in the vehicle longitudinal direction through the lateral center position of the host vehicle) with respect to a straight line parallel to a tangent of the target travel line passing through the lateral center position of the host vehicle (hereafter referred to the tangent of the target travel line). The attitude angle ϕ is deemed to have a positive (+) sign when the vehicle axial line is oriented laterally outwards with respect to the travel path in relation to the tangent of the target travel line, and deemed to have a negative (-) sign when the vehicle axial line is oriented towards the center of the travel path in relation to the tangent of the target travel line.

The vehicle speed detector 12 detects the body speed (vehicle speed) V on the basis of signals from the wheel speed sensors 7. The method for calculating the vehicle speed V is arbitrary. For example, the vehicle speed V may be an average value of the wheel speeds of the four wheels, or an average value of the wheel speeds of left and right rear wheels which are driven wheels.

The target travel position setting unit 13 calculates, as a target travel position P, a position on the target travel line set apart by a forward watch point distance Ls from the host vehicle.

The forward watch point distance setting unit 14 is provided with an attitude determining unit 14a (attitude determining means) for determining the orientation of the host vehicle in relation to the travel path from the attitude angle ϕ, and is adapted to set the forward watch point distance Ls on the basis of the orientation of the host vehicle in relation to the travel path, the vehicle speed V, and the lateral displacement y.

The steering controller 15 calculates a target curve linking the host vehicle position and the target travel position P, calculates an amount of steering control to be performed on the left and right front wheels 1L, 1R on the basis of the target curve, and drives the steering actuator 5 on the basis of the amount of steering control.

### [Steering control process]

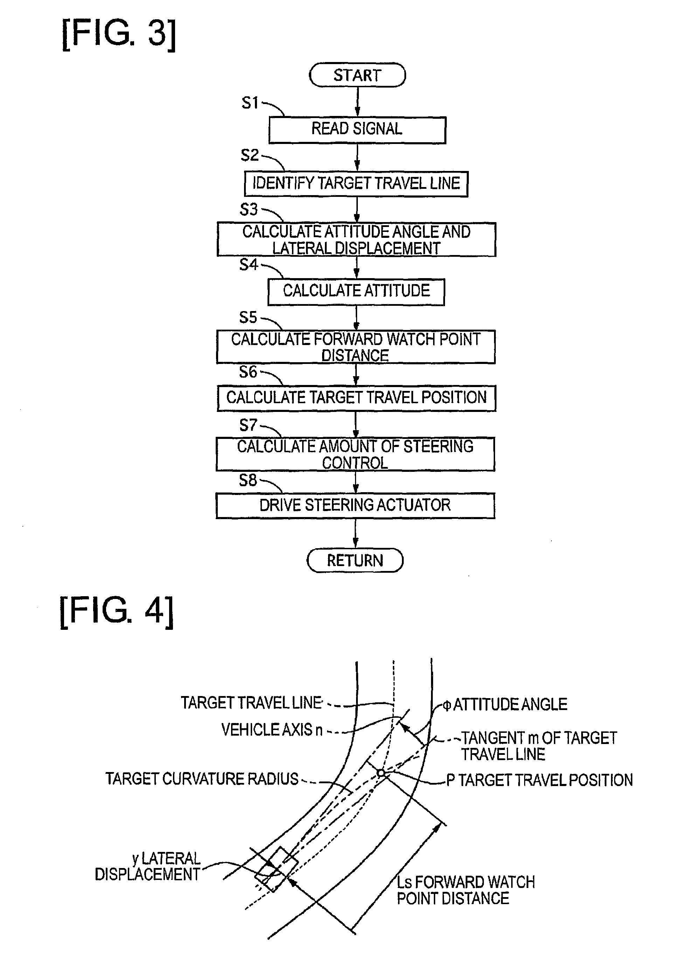

FIG. 3 is a flow chart showing the flow of a steering control process executed by the control unit 6 according to the first embodiment. Each of the steps will now be described.

In step S1, the vehicle speed detector 12 reads the sensor signals from the wheel speed sensors 7, and the target travel line identification unit 10 and the attitude angle/lateral displacement detector 11 reads an imaged image from the camera 8 and the host vehicle position information from the GPS receiver 9.

In step S2, the target travel line identification unit 10 identifies the target travel line on the basis of the imaged image obtained from the camera 8 and the host vehicle position information obtained from the GPS receiver 9.

In step S3, the attitude angle/lateral displacement detector 11 calculates the vehicle attitude angle ϕ in relation to the travel path and the lateral displacement y of the host vehicle from the target travel line on the basis of the imaged image obtained from the camera 8 and the host vehicle position information obtained from the GPS receiver 9.

In step S4, the attitude determining unit 14a determines the orientation of the host vehicle in relation to the travel path from the attitude angle ϕ. If the sign of the attitude angle ϕ is positive (+), the host vehicle is determined to be oriented outwards with respect to the travel path. If the sign of the attitude angle ϕ is negative (-), the host vehicle is determined to be oriented towards the center of the travel path. If the attitude angle ϕ is zero, the orientation of the host vehicle is determined to be parallel to the travel path.

In step S5, the forward watch point distance setting unit 14 sets the forward watch point distance Ls on the basis of the vehicle speed V, the lateral displacement y, and the orientation of the host vehicle in relation to the travel path. The method for setting the forward watch point distance Ls will be described further below.

In step S6, the target travel position setting unit 13 calculates a position on the target travel line set apart by the forward watch point distance Ls from the host vehicle as the target travel position P.

In step S7, the steering controller 15 calculates a target curve linking the host vehicle position and the target travel position P at a constant curvature, and calculates an amount of steering control to be performed on the left and right front wheels 1L, 1R corresponding to the target curve. At this point, the amount of steering control calculated may be such that the target curve is followed. It is also possible to provide a torque sensor on the steering shaft 4, detect a steering intervention performed by the driver, and set the amount of steering control to zero when steering intervention is performed, or apply an operation torque so as to guide the steering operation performed by the driver until the steering angle of the left and right front wheels 1L, 1R is such that the target curve is followed.

In step S8, the steering controller 15 drives the steering actuator 5 on the basis of the amount of steering control.

FIG.4 shows the host vehicle position, the target travel line, the lateral displacement y, the attitude angle ϕ, the forward watch point distance Ls, the target travel position P, and the target curve in the steering control according to the first embodiment.

### [Method for setting the forward watch point distance Ls]

The forward watch point distance setting unit 14 calculates a forward watch point distance base value Ls_base on the basis of the vehicle speed V. The base value Ls_base is obtained by multiplying the vehicle speed V with a predetermined time constant set in advance.

In the first embodiment, the forward watch point distance base value Ls_base is reduced or increased on the basis of the attitude angle ϕ and the lateral displacement y. Specifically, if the lateral displacement y is equal to or greater than a lateral displacement threshold value y_th, the forward watch point distance base value Ls_base is not changed, and if the lateral displacement y is equal to or greater than the lateral displacement threshold value y_th the forward watch point distance base value Ls_base is changed according to the attitude angle ϕ.
1. If the host vehicle is oriented outwards with respect to the travel path
   If the host vehicle is oriented outwards with respect to the travel path, the forward watch point distance base value Ls_base is reduced by a proportion set in advance.
2. If the host vehicle is oriented towards the center of the travel path
   If the host vehicle is oriented towards the center of the travel path, the forward watch point distance base value Ls_base is increased by a proportion set in advance.
3. If the orientation of the host vehicle is parallel to the travel path
   If the orientation of the host vehicle is parallel to the travel path, the forward watch point distance base value Ls_base is not changed. In other words, if the host vehicle is oriented outwards with respect to the travel path, the forward watch point distance setting unit 14 reduces the forward watch point distance so as to be smaller than when the host vehicle is oriented along the travel path. If the host vehicle is oriented towards the center of the travel path, the forward watch point distance setting unit 14 increases the forward watch point distance so as to be greater than when the host vehicle is oriented along the travel path. If the host vehicle is oriented outwards with respect to the travel path, the forward watch point distance setting unit 14 reduces the forward watch point distance so as to be smaller than when the host vehicle is oriented towards the center of the travel path.

The action of the present embodiment will now be described.

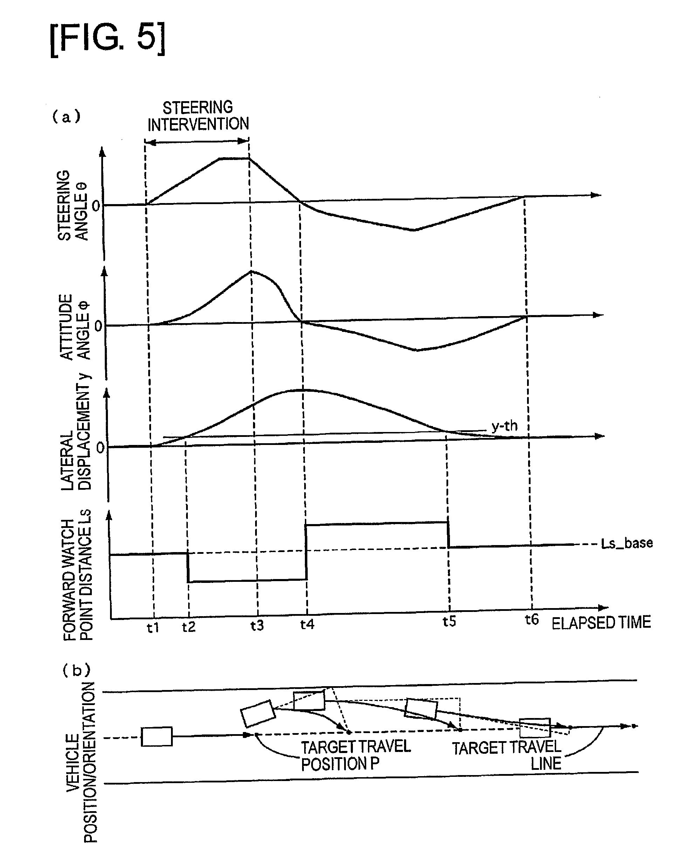

FIG.5 is a time chart showing the operation control action and a schematic diagram showing the vehicle state according to the first embodiment when the driver performs a steering intervention on a straight road. In FIG.5, the steering angle θ of the left and right front wheels 1L, 1R and the lateral displacement y are deemed to be positive (+) on the left side and negative (-) on the right side. The attitude angle ϕ is deemed to be positive (+) when, relative to the tangent m of the target travel line, the vehicle axial line n is oriented laterally outwards with respect to the travel path and negative (-) when the vehicle axial line n is oriented towards the center of the travel path.

Prior to time t1, the vehicle is travelling along the target travel line.

At time t1, the steering angle θ begins to increase due to steering intervention performed by the driver, accompanied by an increase in the attitude angle ϕ and the lateral displacement y. However, the lateral displacement y remains below the lateral displacement threshold value y_th, and the forward watch point distance Ls therefore remains at the forward watch point distance base value Ls_base.

At time t2, the lateral displacement y becomes equal to or greater than the lateral displacement threshold value y_th, and the forward watch point distance Ls is therefore reduced so as to be smaller than the base value Ls_base.

At time t3, the steering intervention performed by the driver is discontinued and the steering angle θ begins to decrease, and the attitude angle ϕ begins to decrease.

At time t4, the attitude angle ϕ changes from positive to negative, and the forward watch point distance Ls is therefore increased so as to be greater than the base value Ls_base.

At time t5, the lateral displacement y falls below the lateral displacement threshold value y_th. Therefore, the forward watch point distance Ls returns to the forward watch point distance base value Ls_base.

At time t6, the vehicle returns onto the target travel line.

### [Action of setting forward watch point distance Ls according to orientation of attitude angle]

In the technique disclosed in JP-A 2010-76573, the forward watch point distance is increased so as to be greater when the lateral displacement of the vehicle is greater. However, if the forward watch point distance is increased in correspondence with the lateral displacement when the vehicle is travelling around a curve having a small curvature radius, the risk of lane departure increases.

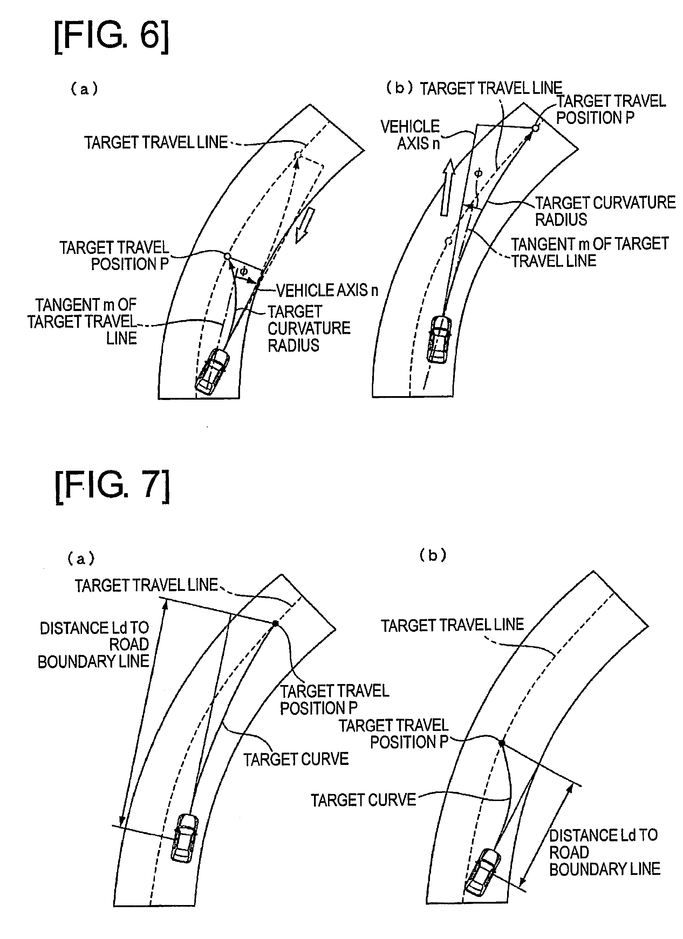

In contrast, in the first embodiment, as shown in FIG. 6(a), the forward watch point distance Ls obtained by reducing the forward watch point distance base value Ls_base is set if the host vehicle is oriented outwards with respect to the travel path. Reducing the forward watch point distance results in the target curve corresponding to the target travel position P being positioned nearer the host vehicle. In this instance, the target curve having a smaller curvature radius increases the amount of steering control that must be performed on the left and right front wheels 1L, 1R in order to follow the target curve. In other words, the control gain for the steering control is increased.

In other words, the host vehicle being oriented outwards with respect to the travel path signifies that the host vehicle is facing a direction that diverges away from the target travel line and that the risk of lane departure is higher. Therefore, in such an instance, reducing the forward watch point distance and increasing the control gain for the steering control makes it possible to eliminate the lane-departing trend of the vehicle at an early stage and inhibit lane departure.

Accordingly, even if the vehicle attitude deviates from the target travel line due to a steering intervention performed by the driver or another cause on a curve having a small curvature radius, it is possible to promptly restore the attitude, making it possible to inhibit lane departure.

In the technique disclosed in JP-A 10-167100, the forward watch point distance is reduced so as to be smaller when the curvature radius of the travel path is smaller. However, uniformly reducing the forward watch point distance even when the risk of lane departure is lower result in an excessively strong control gain in the steering control and a significant change in vehicle behavior, imparting the driver with a sense of unease.

In contrast, in the first embodiment, as shown in FIG. 6(b), when the host vehicle is oriented towards the center of the travel path, a forward watch point distance Ls obtained by increasing the forward watch point distance base value Ls_base is set. Increasing the forward watch point distance results in the target travel position P being positioned further from the host vehicle. In this instance, the target curve having a larger curvature radius reduces the amount of steering control that must be performed on the left and right front wheels 1L, 1R in order to follow the target curve. In other words, the control gain for the steering control is reduced.

In other words, the host vehicle being oriented towards the center of the travel path signifies that the host vehicle is facing a direction returning to the target travel line and that the risk of lane departure is lower. Therefore, in such an instance, extending the forward watch point distance and reducing the control gain for the steering control makes it possible to suppress the change in vehicle behavior and reduce the sense of unease imparted to the driver.

Accordingly, it is possible, on a curve having a small curvature radius, to inhibit the forward watch point distance from being reduced unnecessarily, and to reduce the sense of unease imparted to the driver.

In the steering control according to the first embodiment, instead of the target travel line being uniformly tracked, the return to the target travel line is performed at a gradual pace while a further deviation from the target travel line is suppressed, resulting in a movement that matches the driving sensation experienced by the driver.

It is therefore possible to suppress a sudden change in vehicle behavior during a return to the target travel line after a steering intervention performed by the driver or at the start of steering control from a position set apart from the target travel line, and to reduce the sense of unease imparted to the driver.

In addition, when the driver performs a steering operation, the steering reaction force is greater during a deviation from the target travel line and smaller during a return to the target travel line, making it possible to reduce the sense of unease imparted to the driver.

### [Action of setting forward watch point distance Ls corresponding to lateral displacement y]

In the first embodiment, when the host vehicle is oriented outwards with respect to the travel path, if the lateral displacement y is equal to or greater than the lateral displacement threshold value y_th, the forward watch point distance Ls is reduced so as to be smaller than the base value Ls_base, and if the lateral displacement y is less than the lateral displacement threshold value y_th, the forward watch point distance Ls is kept at the base value Ls_base.

Lane departure is caused not only due to a movement of deviating from the target, i.e., the orientation of the vehicle, but also due to the amount of deviation from the target, i.e., the lateral displacement y. The risk of lane departure is higher in an instance in which the lateral displacement y is greater than in an instance in which the lateral displacement y is smaller.

Accordingly, if the lateral displacement y is greater, reducing the forward watch point distance Ls makes it possible to inhibit lane departure in a more reliable manner. If the lateral displacement y is smaller, avoiding a reduction in the forward watch point distance Ls makes it possible to minimize the control gain when the risk of lane departure is lower and to reduce the sense of unease imparted to the driver.

In the first embodiment, when the host vehicle is oriented towards the center of the travel path, if the lateral displacement y is equal to or greater than the lateral displacement threshold value y_th, the forward watch point distance Ls is extended so as to be greater than the base value Ls_base, and if the lateral displacement y is less than the lateral displacement threshold value y_th, the forward watch point distance Ls is kept at the base value Ls_base.

When the lateral displacement y is smaller, the control gain for the steering control for returning the vehicle to the target travel line is smaller irrespective of the forward watch point distance Ls. Therefore, in such an instance, preventing the forward watch point distance Ls from increasing makes it possible to return the vehicle to the target travel line at an early stage. In contrast, when the lateral displacement y is greater, the control gain is larger. Therefore, in such an instance, increasing the forward watch point distance Ls makes it possible to minimize the control gain and reduce the sense of unease imparted to the driver.

The effects of the present embodiment will now be described.

The vehicle travel assistance device according to the first embodiment has the following effects.
(1) A vehicle travel assistance device for setting a target travel position P set apart by a forward watch point distance Ls in front of a host vehicle on a travel path and assisting the travel of the host vehicle so that the host vehicle travels through the set target travel position P, the vehicle travel assistance device being provided with: an attitude determining unit 14a for determining the orientation of the host vehicle in relation to the travel path; and a watch point distance setting unit 14 for setting, when the host vehicle is oriented outwards with respect to the travel path, a forward watch point distance Ls obtained by reducing a forward watch point distance base value Ls_base so as to be smaller than when the orientation of the host vehicle is parallel to the travel path. It is thereby possible to both inhibit lane departure and reduce the sense of unease imparted on the driver.
(2) A vehicle travel assistance device for setting a target travel position P set apart by a forward watch point distance Ls in front of a host vehicle on a travel path and assisting the travel of the host vehicle so that the host vehicle travels through the set target travel position P, the vehicle travel assistance device being provided with: an attitude determining unit 14a for determining the orientation of the host vehicle in relation to the travel path; and a forward watch point distance setting unit 14 for setting, when the host vehicle is oriented towards the center of the travel path, a forward watch point distance Ls obtained by extending the forward watch point distance base value Ls_base so as to be greater than when the orientation of the host vehicle is parallel to the travel path. It is thereby possible to both inhibit lane departure and reduce the sense of unease imparted on the driver.
(3) An attitude angle/lateral displacement detector 11 for detecting the lateral displacement y of the host vehicle from a target travel line is provided, and when the host vehicle is oriented outwards with respect to the travel path and the detected lateral displacement y is equal to or greater than a lateral displacement threshold value y_th, the forward watch point distance setting unit 14 sets a forward watch point distance Ls so as to be smaller than when the lateral displacement y is smaller than the lateral displacement threshold value y_th. It is thereby possible to both inhibit lane departure and reduce the sense of unease imparted on the driver in a more reliable manner.
(4) An attitude angle/lateral displacement detector 11 for detecting the lateral displacement y of the host vehicle from a target travel line is provided, and when the host vehicle is oriented towards the center of the travel path and the detected lateral displacement y is equal to or greater than a lateral displacement threshold value y_th, the forward watch point distance setting unit 14 sets a forward watch point distance Ls so as to be greater than when the lateral displacement y is smaller than the lateral displacement threshold value y_th. It is thereby possible to both return the vehicle to the target travel line and reduce the sense of unease imparted on the driver.

### [Second embodiment]

The second embodiment is an example in which the forward watch point distance Ls is set on the basis of the distance to a road boundary line in front of the vehicle. A description will be given for portions that differ from the first embodiment.

The attitude angle/lateral displacement detector (boundary line distance detection means) 11 calculates, in addition to the vehicle attitude angle ϕ in relation to the travel path and the lateral displacement y of the host vehicle from the target travel line, the distance Ld to the road boundary line in front of the vehicle, on the basis of the imaged image obtained from the camera 8 and the host vehicle position information obtained from the GPS receiver 9.

The forward watch point distance setting unit 14 sets the forward watch point distance Ls on the basis of the vehicle speed V, the lateral displacement y, the attitude angle ϕ, and the distance Ld to the road boundary line in front of the vehicle.

### [Steering control process]

The steering control process according to the second embodiment is substantially identical to the steering control process according to the first embodiment shown in FIG.3, but is different in that the distance Ld to the road boundary line in front of the vehicle is calculated in step S3, and in that the forward watch point distance Ls is set on the basis of the vehicle speed V, the lateral displacement y, the attitude angle ϕ, and the distance Ld to the road boundary line in front of the vehicle in step S4.

### [Method for setting forward watch point distance Ls]

As with the first embodiment, a forward watch point distance base value Ls_base corresponding to the vehicle speed V is calculated, and the base value Ls_base is changed according to the lateral displacement y and the orientation of the attitude angle ϕ.

In the second embodiment, additionally, if the distance Ld to the road boundary line in front of the vehicle is equal to or smaller than a boundary line distance threshold value Ld_th, the forward watch point distance Ls, which is set according to the lateral displacement y and the orientation of the attitude angle ϕ, is set to distance Ld.

The action of the present embodiment will now be described.

### [Action of setting forward watch point distance Ls according to distance Ld to road boundary line]

In the second embodiment, if the distance Ld to the road boundary line in front of the vehicle exceeds the boundary line distance threshold value Ld_th, the forward watch point distance Ls remains at the value obtained by changing the base value Ls_base according to the lateral displacement y and the orientation of the host vehicle in relation to the travel path as shown in FIG. 7(a). On the other hand, if the distance Ld to the road boundary line in front of the vehicle is equal to or less than the boundary line distance threshold value Ld_th, the forward watch point distance Ls is set to distance Ld as shown in FIG. 7(b).

In particular, in a curve having a small curvature radius, even when the vehicle is travelling along the target travel line, if the distance Ld to the road boundary line in front of the vehicle is small, the risk of lane departure is higher. In such an instance, there is a possibility that setting the forward watch point distance Ls on the basis of the lateral displacement y and the orientation of the host vehicle in relation to the travel path will not make it possible to prevent lane departure.

Accordingly, in the second embodiment, if the distance Ld is equal to or smaller than the boundary line distance threshold value Ld_th, the forward watch point distance Ls is reduced, whereby lane departure can be inhibited in a more reliable manner. Setting the forward watch point distance Ls to the distance Ld in this instance makes it possible to set an appropriate target travel position P which prevents departure from the travel path.

In addition, adding a configuration in which the forward watch point distance Ls is restricted to the distance Ld to the road boundary line when Ld ≤ Ld th makes it possible to sufficiently deal with a curve having a small curvature radius. This makes it possible to increase the forward watch point distance base value Ls_base corresponding to the vehicle speed V, resulting in an effect of making it possible to further reduce the sense of unease imparted on the driver.

The effects of the present embodiment will now be described.

The vehicle travel assistance device according to the second embodiment has the following effects in addition to the effects (1) to (4) of the first embodiment.
(5) An attitude angle/lateral displacement detector (boundary line distance detection means) 11 for detecting the distance Ld to the road boundary line in front of the vehicle is provided. If the detected distance Ld to the road boundary line is equal to or smaller than the boundary line distance threshold value Ld_th, the forward watch point distance setting unit 14 reduces the forward watch point distance Ls so as to be smaller than when the distance Ld to the road boundary line exceeds the boundary line distance threshold value Ld_th. It is thereby possible to inhibit lane departure in a curve having a small curvature radius in a more reliable manner. In addition, it is possible to set a greater forward watch point distance base value Ls_base, making it possible to further reduce the sense of unease imparted to the driver.
(6) If the detected distance Ld to the road boundary line is equal to or smaller than the boundary line distance threshold value Ld_th, the forward watch point distance setting unit 14 sets the forward watch point distance Ls so as to be equal to the distance Ld to the road boundary line, making it possible to set an appropriate target travel position P which prevents departure from the travel path.

### (Other embodiments)

Embodiments for carrying out the present invention have been described above with reference to embodiments. However, the specific configuration of the present invention is not limited to that in the embodiments, and design changes and other modifications that do not depart from the scope of the invention are also included in the present invention.

For example, the forward watch point distance base value Ls_base may be reduced or extended solely on the basis of the orientation of the host vehicle in relation to the travel path.

When reducing or extending the forward watch point distance base value Ls_base, the proportion of reduction or extension may be varied according to the attitude angle ϕ, the lateral displacement y, or the distance Ld to the road boundary line in front of the vehicle. For example, in the case in which attitude angle ϕ is used, the proportion of reduction or extension may be made to be greater when the absolute value |ϕ| of the attitude angle ϕ is greater.

## Claims

1. A vehicle travel assistance device for setting a target travel position set apart by a forward watch point distance in front of a host vehicle on a travel path and assisting the travel of the host vehicle so that the host vehicle travels through the set target travel position, the vehicle travel assistance device being **characterized in** being provided with:
attitude determining means for determining the orientation of the host vehicle in relation to the travel path; and
watch point distance setting means for reducing, when the host vehicle is oriented outwards with respect to the travel path, the forward watch point distance so as to be smaller than when the orientation of the host vehicle is parallel to the travel path.

2. A vehicle travel assistance device for setting a target travel position set apart by a forward watch point distance in front of a host vehicle on a travel path and assisting the travel of the host vehicle so that the host vehicle travels through the set target travel position, the vehicle travel assistance device being **characterized in** being provided with:
attitude determining means for determining the orientation of the host vehicle in relation to the travel path; and
watch point distance setting means for extending, when the host vehicle is oriented towards the center of the travel path, the forward watch point distance so as to be greater than when the orientation of the host vehicle is parallel to the travel path.

3. The vehicle travel assistance device according to claim 1, **characterized in that**
lateral displacement detection means for detecting the lateral displacement of the host vehicle from the center position of the travel path is provided; and
when the detected lateral displacement is equal to or greater than a lateral displacement threshold value, the watch point distance setting means reduces the forward watch point distance so as to be smaller than when the lateral displacement is smaller than the lateral displacement threshold value.

4. The vehicle travel assistance device according to claim 2, **characterized in that**:
lateral displacement detection means for detecting the lateral displacement of the host vehicle from the center position of the travel path is provided; and
when the detected lateral displacement is equal to or greater than a lateral displacement threshold value, the watch point distance setting means extends the forward watch point distance so as to be greater than when the lateral displacement is smaller than the lateral displacement threshold value.

5. The vehicle travel assistance device according to any of claims 1 through 4, **characterized in that**:
boundary line distance detection means for detecting the distance to a road boundary line in front of the host vehicle is provided; and
when the detected distance to the road boundary line is equal to or smaller than a boundary line distance threshold value set in advance, the watch point distance setting means reduces the forward watch point distance so as to be smaller than when the distance to the road boundary line exceeds the boundary line distance threshold value.

6. The vehicle travel assistance device according to claim 5, **characterized in that**
when the detected distance to the road boundary line is equal to or smaller than the boundary line distance threshold value, the watch point distance setting means sets the forward watch point distance so as to be equal to the distance to the road boundary line.
